# EUROPEAN PATENT APPLICATION

(11) **EP 4 380 224 A1**
(43) Date of publication of application: **05.06.2024**
(21) Application number: 23212177.2
(22) Date of filing: 27.11.2023
(51) Int. Cl.: H04W 24/10, H04L 5/00, H04B 1/525

(54) **METHOD FOR SIGNALING IMPROVED RECEIVE PERFORMANCE REPORT OF VICTIM BANDS AND ASSOCIATED USER EQUIPMENT**

(30) Priority: 30.11.2022 US 202263384772 P; 21.11.2023 US 202318515302
(71) Applicant: MediaTek Inc., Hsin-Chu 300 (TW)
(72) Inventor: FU, Huan-Ren, 30078 Hsinchu City (TW); CAO, Aijun, SE-583 30 Linkoping (SE); CHANG, Hsiang-Hui, 30078 Hsinchu City (TW)
(74) Representative: Haseltine Lake Kempner LLP

(57) **Abstract**

A method for signaling an improved receive (Rx) performance report of victim bands includes: configuring a signaling message to indicate the improved Rx performance report, and sending the signaling message. The improved Rx performance report includes information of K improved Rx performance indicators being only a subset of M improved Rx performance indicators of a user equipment (UE), where K and M are positive integers, M is larger than K, and K is not smaller than one.

## Description

This application claims the benefit of U.S. Provisional Application No. 63/384,772, filed on November 30th, 2022. The content of the application is incorporated herein by reference.

### Background

The present invention relates to wireless communications, and more particularly, to a method for signaling an improved receive (Rx) performance report of victim bands and an associated user equipment (UE) .

In 5G New Radio (NR) cellular communication systems, thousands of band combinations for carrier aggregation (CA) have been specified. In the current user equipment (UE) specifications, each band combination is specified with nominal maximum sensitivity degradation (MSD) values originating from different MSD mechanisms. The UE (e.g., 5G terminal) should be configured to satisfy a reference sensitivity level which is the minimum average power for the UE when receiving a downlink signal from a base station of a radio access network such as a next generation Node-B (gNB) included in a next generation radio access network (NG-R_AN). When the harmonic component and/or intermodulation distortion (IMD) component occur, there is a possibility that the reference sensitivity level for the downlink signal may not be satisfied due to the uplink signal transmitted by the UE itself. Therefore, when the harmonic component and/or IMD component occur, an MSD value is defined for a corresponding band combination, so relaxation for the reference sensitivity level in the Rx band combination related to UE's own uplink transmission may be allowed. Here, the MSD value may mean the maximum allowed reduction of the reference sensitivity level. When the MSD value is defined for a specific downlink band combination of the UE, the reference sensitivity level of the corresponding downlink band combination may be relaxed by the amount of the defined MSD value.

Some of the specified MSD values in current specifications are quite large and the network treats all UEs equally with very low order modulation, such as quadrature phase shift keying (QPSK), being scheduled. This results in a very low data rate on all UEs. With modern design improvement of UE, it is possible that MSD values are improved to smaller values for some UEs, which means better signal to noise ratio that allows the network to schedule higher order modulation and brings higher data rate. In order to harvest such a gain, a UE has to inform the network of the UE's advanced capability.

### Summary

One of the objectives of the claimed invention is to provide a method for signaling an improved receive (Rx) performance report of victim bands and an associated user equipment (UE).

According to a first aspect of the present invention, an exemplary method for signaling an improved receive (Rx) performance report of victim bands is disclosed. The exemplary method includes: configuring a signaling message to indicate the improved Rx performance report, wherein the improved Rx performance report comprises information of K improved Rx performance indicators being only a subset of M improved Rx performance indicators of a user equipment (UE), K and M are positive integers, M is larger than K, and K is not smaller than one; and sending the signaling message.

According to a second aspect of the present invention, an exemplary user equipment (UE) for signaling an improved receive (Rx) performance report of victim bands is disclosed. The exemplary UE includes a wireless communication circuit and a control circuit. The control circuit is arranged to configure a signaling message to indicate the improved Rx performance report, and instruct the wireless communication circuit to send the signaling message, wherein the improved Rx performance report comprises information of K improved Rx performance indicators being only a subset of M improved Rx performance indicators of the UE, K and M are positive integers, M is larger than K, and K is not smaller than one.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram illustrating a cellular communication system according to an embodiment of the present invention.
FIG. 2 is a diagram illustrating network scheduling with reference to a single top reported lower (improved) MSD value according to an embodiment of the present invention.
FIG. 3 is a diagram illustrating network scheduling with reference to two top reported lower (improved) MSD values according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

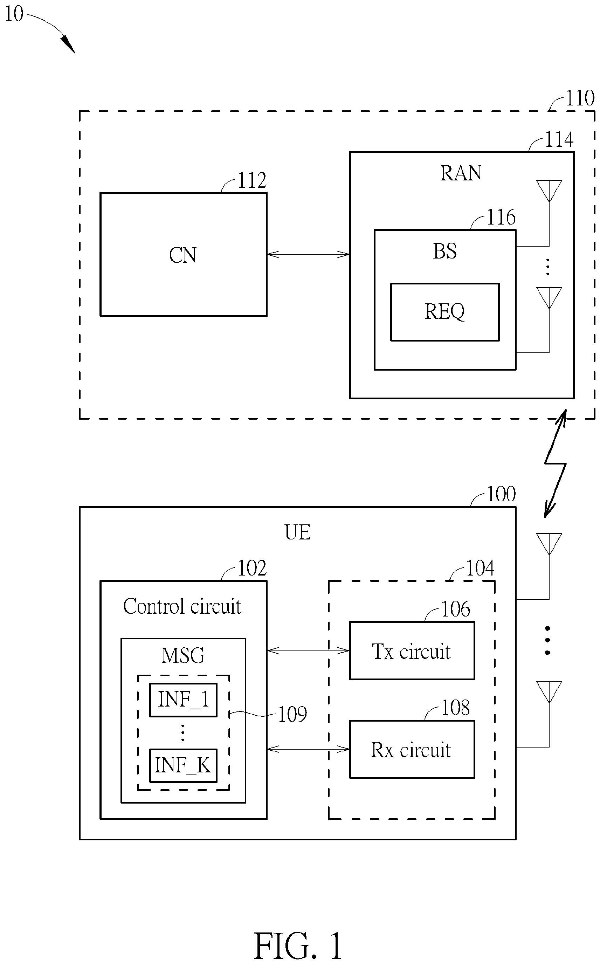

FIG. 1 is a diagram illustrating a cellular communication system according to an embodiment of the present invention. The cellular communication system 10 include a user equipment (UE) 100 and a network 110. The UE 100 includes a control circuit 102 and a wireless communication circuit 104. The wireless communication circuit 104 acts as a wireless interface, and includes a transmit (Tx) circuit 106 and a receive (Rx) circuit 108. The Tx circuit 106 may include more than one Tx chain, and the Rx circuit 108 may include more than one Rx chain. The control circuit 102 may be implemented by a general-purpose processor for realizing the proposed improved Rx performance reporting function in a software-based manner, or may be implemented by a dedicated controller for realizing the proposed improved Rx performance reporting function in a hardware-based manner. To put it another way, the present invention has no limitations on the implementation of the control circuit 102.

The network 110 may include a core network (CN) 112 and a radio access network (RAN) 114. In a case where the cellular communication system 10 is a 5G NR cellular communication system, the UE 100 is a 5G terminal, the core network 112 is a 5G core network (5GC), and a base station (BS) 116 of the RAN 114 is a next generation Node-B (gNB) included in a next generation radio access network (NG-RAN).

The UE 100 supports signaling of an improved Rx performance report of victim bands as proposed by the present invention. It should be noted that only the components pertinent to the present invention are illustrated in FIG. 1. In practice, the UE 100 can include additional components to achieve designated functions. In this embodiment, the control circuit 102 is arranged to configure a signaling message MSG to indicate the improved Rx performance report 109, and instruct the wireless communication circuit 104 (particularly, Tx circuit 106 of wireless communication circuit 104) to send the signaling message MSG to the network 110 (particularly, BS 116 of RAN 114) for informing the network 110 of UE's improved Rx performance report 109. In this embodiment, the improved Rx performance report 109 includes information of K improved Rx performance indicators (labeled by INF_1-INF_K) being only a subset of M improved Rx performance indicators of the UE 100, K and M are positive integers, M is larger than K, and K is not smaller than one. For example, M improved Rx performance indicators may be measured at the factory before the UE 100 (e.g., cellular phone) is shipped to the market, and only J (*J* ≤ *K* < ***M***) improved Rx performance indicators may be selected from M improved Rx performance indicators and recorded in a non-volatile memory of the UE 100. In this way, the memory requirement of the UE 100 can be relaxed.

In some embodiments of the present invention, after the network 110 is informed of the improved Rx performance reporting capability by the UE 100, the wireless communication circuit 104 (particularly, Rx circuit 108 of wireless communication circuit 104) is arranged to receive a request REQ from the network 110 (particularly, BS 116 of RAN 114), where the request REQ may require the UE 100 to report information of only K improved Rx performance indicators. In response to the request REQ issued from the BS 116, the control circuit 102 reads the K improved Rx performance indicators stored in the non-volatile memory of the UE 100, and creates the signaling message MSG to carry the improved Rx performance report 109 that is represented by information INF_1-INF_K of K improved Rx performance indicators.

In some embodiments of the present invention, each improved Rx performance indicator may be an Rx performance degradation value that is actually supported by hardware of the UE 100 and is lower than a nominal (standard) Rx performance degradation value specified in the cellular communication standard (e.g., 5G NR standard). As mentioned above, the UE 100 does not need to report information of all M (*M* > ***K***) improved Rx performance indicators, and is required to report information of only K (***K* ≥ 1**) improved Rx performance indicators. For example, the K improved Rx performance indicators are top K largest improved Rx performance indicators among the M improved Rx performance indicators of the UE 100. Hence, the signaling overhead can be reduced.

For better comprehension of technical features of the present invention, the following assumes that the UE 100 has improved (lower) MSD performance reporting capability, each improved Rx performance indicator is an MSD value, and the improved Rx performance report 109 is an improved (lower) MSD report. The same concept may be applied to signaling of UE's other improved Rx performance indicators. These alternative designs all falls within the scope of the present invention.

Each band combination of CA is specified with nominal MSD values originating from different MSD mechanisms (i.e., aggressor mechanisms). By way of example, but not limitation, the MSD mechanisms may include:
A. MSD due to aggressor uplink N^{th} order harmonic falling in receiving channel
B. MSD due to receiver N^{th} order harmonic mixing relationship with aggressor
C. MSD due to close proximity of one or multiple aggressor carrier group frequency
D. MSD due to N^{th} order forward, reverse or mixture of forward and reverse intermodulation (IMD) of two or multiple aggressor uplink carrier groups.

Suppose that the reference sensitivity level (i.e., minimum Rx sensitivity requirement) of the UE 100 is -100dBm (=10^-10mW), a nominal (standard) MSD value of a specific band combination under the MSD mechanism A is 20dB (= -80dBm), a nominal (standard) MSD value of the specific band combination under the MSD mechanism B is 25dB (= -75dBm), a nominal (standard) MSD value of the specific band combination under the MSD mechanism C is 7dB (= -93dBm), and a nominal (standard) MSD value of the specific band combination under the MSD mechanism D is 30dB (= -70dBm). An actual MSD value of the specific band combination under the MSD mechanism A that is actually supported by hardware of the UE 100 is 10dB (= -90dBm), resulting in 10dB improvement on UE's Rx sensitivity due to the lower (improved) MSD value. An actual MSD value of the specific band combination under the MSD mechanism B that is actually supported by hardware of the UE 100 is 15dB (= -85dBm), resulting in 10dB improvement on UE's Rx sensitivity due to the lower (improved) MSD value. An actual MSD value of the specific band combination under the MSD mechanism C that is actually supported by hardware of the UE 100 is 5dB (= -95dBm), resulting in 2dB improvement due to the lower (improved) MSD value. An actual MSD value of the specific band combination under the MSD mechanism D that is actually supported by hardware of the UE 100 is 30dB (= -70dBm), resulting in no improvement. Compared to a lower (improved) MSD reporting approach that reports all of the improved MSD values (e.g., 10dB, 15 dB, and 5 dB), the proposed lower (improved) MSD reporting approach may report top K largest improved MSD values (which correspond to K most worst cases) being only a subset of all improved MSD values (e.g., 10dB, 15 dB, and 5 dB). For example, when K is set to 1 by the request REQ issued from the network 110 (particularly, BS 116 of RAN 114), only a single improved MSD value (e.g., 15dB) is signaled from the UE 100 to the network 110 (particularly, BS 116 of RAN 114). For another example, when K is set to 2 by the network 110 (particularly, BS 116 of RAN 114), only two improved MSD values (e.g., 15dB and 10dB) are signaled from the UE 100 to the network 110 (particularly, BS 116 of RAN 114).

As mentioned above, the improved Rx performance report 109 signaled by the signaling message MSG includes information INF_1-INF_K of K improved Rx performance indicators, where the number K may be decided by the network. In a case where the improved Rx performance indicators are lower (improved) MSD values, the information INF_1-INF_K set in the signaling message MSG is indicative of information of the lower (improved) MSD values to be reported. Regarding each of the K largest MSD values, the lower (improved) MSD report (i.e., INF_i, where **1≤*i*≤*K***) may include information indicative of an MSD mechanism, information indicative of an aggressor order, information indicative of an improved MSD value, or a combination thereof. It should be noted that the present invention has no limitations on representation of information indicative of an MSD mechanism, information indicative of an aggressor order, and information indicative of an improved MSD value.

In some embodiments of the present invention, information indicative of an MSD mechanism and information indicative of an aggressor order may be represented using two bytes, two elements, or any feasible means. For example, harmonic is indexed by H, intermodulation is indexed by I, crossband isolation (no order number) is indexed by C, and the order number is indexed by 1/2/3/4/5/6...n. Hence, 2^{nd} order UL harmonic is represented by H2, 3^{rd} order UL harmonic is represented by H3, 2^{nd} order UL intermodulation is represented by I2, and 3^{rd} order UL intermodulation is represented by I3. For another example, harmonic is indexed by 0, intermodulation is indexed by 1, crossband isolation is indexed by 2, triple beat is indexed by 3, and the order number is indexed by 1/2/3/4/5/6...n. Hence, 2^{nd} order UL harmonic is represented by 02, 3^{rd} order UL harmonic is represented by 03, 2^{nd} order UL intermodulation is represented by 12, and 3^{rd} order UL intermodulation is represented by 13. It should be noted that these are for illustrative purposes only, and are not meant to be limitations of the present invention.

In some embodiments of the present invention, information indicative of an improved MSD value may be represented by an integer number of the improved MSD value. That is, the improved MSD value is rounded to an integer dB before reported to the network. However, this is for illustrative purposes only, and is not meant to be limitations of the present invention. For example, information indicative of an improved MSD value may be represented by an index of a pre-defined MSD value in a lookup table.

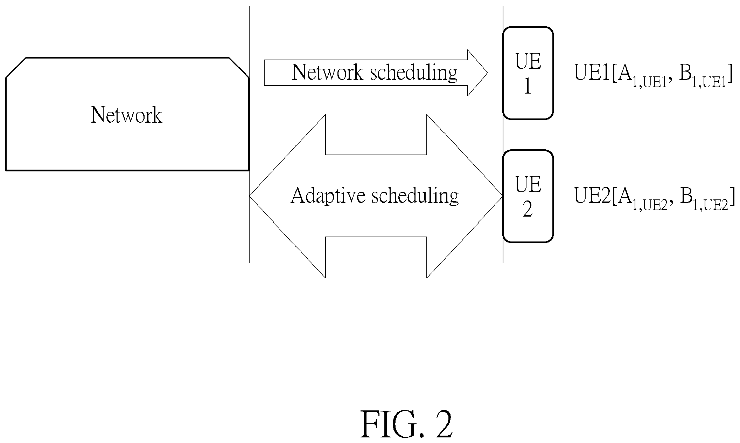

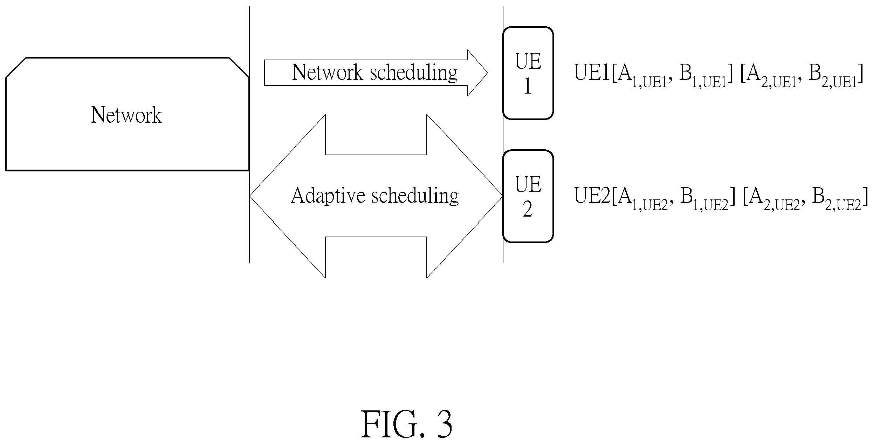

In summary, one of the objectives of the present invention is to introduce an adaptive lower (improved) MSD performance reporting of victim bands. With the present invention, the network 110 can require UE 100 only to report the top K largest MSD values together with its mechanism indexing. FIG. 2 is a diagram illustrating network scheduling with reference to a single top reported lower (improved) MSD value according to an embodiment of the present invention. In this example, the number K is set by 1, and UE reports [A₁, B₁], where A₁ may be two bytes or two elements indicative of an index of an MSD mechanism and its aggressor order, and B₁ may be an integer number of the improved MSD value. FIG. 3 is a diagram illustrating network scheduling with reference to two top reported lower (improved) MSD values according to an embodiment of the present invention. In this example, the number K is set by 2, and UE reports [A₁, B₁] [A₂, B₂], where A₁ may be two bytes or two elements indicative of an index of MSD mechanism one and its aggressor order, B₁ may be an integer number of an improved MSD value of A1, A₂ may be two bytes or two elements indicative of an index of MSD mechanism two and its aggressor order, and B₂ may be an integer number of an improved MSD value of A2. It should be noted that the number K of improved MSD values that UE is required to report can be varied with flexibility of network scheduling.

Those skilled in the art will readily observe that numerous modifications and alterations of the device and method may be made while retaining the teachings of the invention. Accordingly, the above disclosure should be construed as limited only by the metes and bounds of the appended claims.

The present invention may also be defined by the following numbered clauses.
1. A method for signaling an improved receive (Rx) performance report of victim bands, comprising:
   configuring a signaling message to indicate the improved Rx performance report, wherein the improved Rx performance report comprises information of K improved Rx performance indicators being only a subset of M improved Rx performance indicators of a user equipment (UE), K and M are positive integers, M is larger than K, and K is not smaller than one; and
   sending the signaling message.
2. The method of clause 1, wherein each improved Rx performance indicator is an Rx performance degradation value that is supported by the UE and is lower than a nominal Rx performance degradation value.
3. The method of clause 2, wherein the K improved Rx performance indicators are top K largest improved Rx performance indicators among the M improved Rx performance indicators of the UE.
4. The method of clause 2, wherein the improved Rx performance report is an improved maximum sensitivity degradation (MSD) report.
5. The method of clause 4, wherein regarding each of the K improved Rx performance indicators, the improved Rx performance report comprises information indicative of an MSD mechanism.
6. The method of clause 4, wherein regarding each of the K improved Rx performance indicators, the improved Rx performance report comprises information indicative of an aggressor order.
7. The method of clause 4, wherein regarding each of the K improved Rx performance indicators, the improved Rx performance report comprises information indicative of an improved MSD value.
8. The method of clause 1, further comprising:
   receiving a request from a base station (BS) of a radio access network (RAN), wherein the request requires the UE to report information of only K improved Rx performance indicators.
9. A user equipment (UE) for signaling an improved receive (Rx) performance report of victim bands, comprising:
   a wireless communication circuit; and
   a control circuit, arranged to configure a signaling message to indicate the improved Rx performance report, and instruct the wireless communication circuit to send the signaling message, wherein the improved Rx performance report comprises information of K improved Rx performance indicators being only a subset of M improved Rx performance indicators of the UE, K and M are positive integers, M is larger than K, and K is not smaller than one.
10. The UE of clause 9, wherein each improved Rx performance indicator is an Rx performance degradation value that is supported by the UE and is lower than a nominal Rx performance degradation value.
11. The UE of clause 10, wherein the K improved Rx performance indicators are top K largest improved Rx performance indicators among the M improved Rx performance indicators of the UE.
12. The UE of clause 10, wherein the improved Rx performance report is an improved maximum sensitivity degradation (MSD) report.
13. The UE of clause 12, wherein regarding each of the K improved Rx performance indicators, the improved Rx performance report comprises information indicative of an MSD mechanism.
14. The UE of clause 12, wherein regarding each of the K improved Rx performance indicators, the improved Rx performance report comprises information indicative of an aggressor order.
15. The UE of clause 12, wherein regarding each of the K improved Rx performance indicators, the improved Rx performance report comprises information indicative of an improved MSD value.
16. The UE of clause 9, wherein the wireless communication circuit is further arranged to receive a request from a base station (BS) of a radio access network (RAN), and the request requires the UE to report information of only K improved Rx performance indicators.

## Claims

1. A method for signaling an improved receive, Rx, performance report (109) of victim bands, comprising:
configuring a signaling message to indicate the improved Rx performance report (109), wherein the improved Rx performance report (109) comprises information of K improved Rx performance indicators being only a subset of M improved Rx performance indicators of a user equipment, UE, (100) where K and M are positive integers, M is larger than K, and K is not smaller than one; and
sending the signaling message.

2. The method of claim 1, wherein each improved Rx performance indicator is an Rx performance degradation value that is supported by the UE (100) and is lower than a nominal Rx performance degradation value.

3. The method of claim 2, wherein the K improved Rx performance indicators are top K largest improved Rx performance indicators among the M improved Rx performance indicators of the UE (100).

4. The method of claim 2, wherein the improved Rx performance report (109) is an improved maximum sensitivity degradation, MSD, report.

5. The method of claim 4, wherein regarding each of the K improved Rx performance indicators, the improved Rx performance report (109) comprises information indicative of an MSD mechanism; or
wherein the improved Rx performance report (109) comprises information indicative of an aggressor order.

6. The method of claim 4, wherein regarding each of the K improved Rx performance indicators, the improved Rx performance report (109) comprises information indicative of an improved MSD value.

7. The method of claim 1, further comprising:
receiving a request from a base station, BS, (116) of a radio access network (110), RAN, (114) wherein the request requires the UE (100) to report information of only K improved Rx performance indicators.

8. A user equipment, UE, (100) for signaling an improved receive, Rx, performance report of victim bands, comprising:
a wireless communication circuit (104); and
a control circuit (102), arranged to configure a signaling message to indicate the improved Rx performance report (109), and instruct the wireless communication circuit (104) to send the signaling message, wherein the improved Rx performance report (109) comprises information of K improved Rx performance indicators being only a subset of M improved Rx performance indicators of the UE (100), K and M are positive integers, M is larger than K, and K is not smaller than one.

9. The UE (100) of claim 8, wherein each improved Rx performance indicator is an Rx performance degradation value that is supported by the UE (100) and is lower than a nominal Rx performance degradation value.

10. The UE (100) of claim 9, wherein the K improved Rx performance indicators are top K largest improved Rx performance indicators among the M improved Rx performance indicators of the UE (100).

11. The UE (100) of claim 9, wherein the improved Rx performance report (109) is an improved maximum sensitivity degradation, MSD, report.

12. The UE (100) of claim 11, wherein regarding each of the K improved Rx performance indicators, the improved Rx performance report (109) comprises information indicative of an MSD mechanism.

13. The UE (100) of claim 11, wherein regarding each of the K improved Rx performance indicators, the improved Rx performance report (109) comprises information indicative of an aggressor order.

14. The UE (100) of claim 11, wherein regarding each of the K improved Rx performance indicators, the improved Rx performance report (109) comprises information indicative of an improved MSD value.

15. The UE (100) of claim 8, wherein the wireless communication circuit (104) is further arranged to receive a request from a base station, BS, (116) of a radio access network (110), RAN, (114) and the request requires the UE (100) to report information of only K improved Rx performance indicators.
